# DEMANDE DE BREVET EUROPEEN

(11) **EP 3 653 268 A1**
(43) Date de publication de la demande: **20.05.2020**
(21) Numéro de dépôt: 19202344.8
(22) Date de dépôt: 10.10.2019
(51) Int. Cl.: A62C 3/08, B64C 1/40, F16L 5/04, F16L 5/12, B64D 37/32, B64D 37/00

(54) **PAROI PARE-FEU COMPORTANT UN DISPOSITIF DE RACCORDEMENT D'UNE CANALISATION AINSI QU'UN BOUCLIER THERMIQUE ET AÉRONEF COMPRENANT AU MOINS UNE TELLE PAROI PARE-FEU**

(30) Priorité: 16.11.2018 FR 1860599
(71) Demandeur: Airbus Operations, 31060 Toulouse (FR)
(72) Inventeur: BADERSPACH, Jérôme, 31530 Bretx (FR); RAYNARD, Jean, 31300 Toulouse (FR); BENQUET, Jérôme, 31470 Fontenilles (FR)
(74) Mandataire: Fantin, Laurent

(57) **Abrégé**

L'invention a pour objet une paroi pare-feu d'aéronef séparant une première zone (52.1) correspondant à une zone feu et une deuxième zone (52.2). La paroi pare-feu (54) comprend un corps tubulaire (60) en un matériau conducteur thermiquement, à cheval de part et d'autre de la paroi pare-feu (54), et au moins un bouclier thermique (70), positionné dans la première zone (52.1), recouvrant le corps tubulaire (60) tout en étant espacé dudit corps tubulaire (60) de manière à créer une lame d'air (72) entre le bouclier thermique (70) et le corps tubulaire (60). Cette configuration permet de freiner la propagation de la chaleur en direction de la deuxième zone (52.2).

L'invention a également pour objet un aéronef comprenant au moins une telle paroi pare-feu.

## Description

La présente demande se rapporte à une paroi pare-feu comportant un dispositif de raccordement d'une canalisation et un bouclier thermique ainsi qu'à un aéronef comprenant au moins une telle paroi pare-feu.

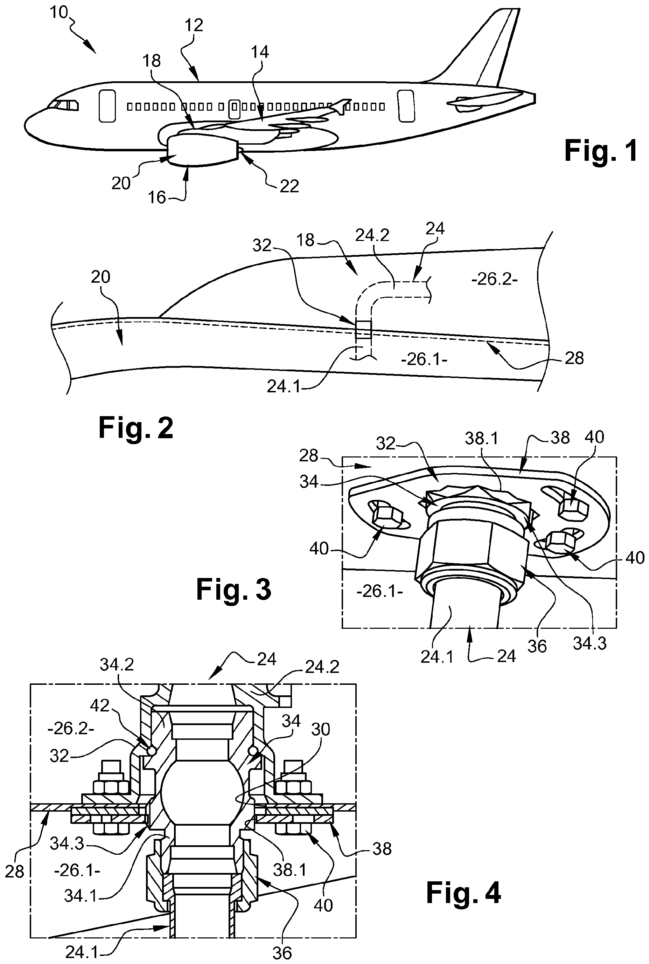

Selon un mode de réalisation visible sur la figure 1, un aéronef 10 comprend un fuselage 12, deux ailes 14, disposées de part et d'autre du fuselage 12, et des ensembles propulsifs 16 fixés sous les ailes 14 par l'intermédiaire de mâts 18. Chaque ensemble propulsif 16 comprend une nacelle 20 et une turbomachi ne 22 positionnée à l'intérieur de la nacelle 20.

Comme illustré sur la figure 2, une canalisation 24 d'un fluide inflammable chemine dans une première zone 26.1, positionnée dans l'ensemble propulsif 16, puis dans une deuxième zone 26.2 positionnée dans le mât 18, les première et deuxième zones 26.1, 26.2 étant séparées par une paroi pare-feu 28 qui présente un orifice 30 pour permettre le passage de la canalisation 24 à travers la paroi pare-feu 28. Cette dernière est configurée pour limiter la propagation du feu et les transferts thermiques entre les première et deuxième zones 26.1, 26.2.

Selon une configuration, la canalisation 24 comprend un premier tronçon 24.1 disposé dans la première zone 26.1, un deuxième tronçon 24.2 disposé dans la deuxième zone 26.2 ainsi qu'un dispositif de raccordement 32 reliant les premier et deuxième tronçons 24.1, 24.2, positionné au niveau de l'orifice 30 de la paroi pare-feu 28, comme illustré sur les figures 3 et 4. Un dispositif de raccordement est également décrit dans le document US2326143.

Le dispositif de raccordement 32 comprend un corps tubulaire 34 qui présente une première extrémité 34.1, positionnée dans la première zone 26.1 et reliée au premier tronçon 24.1 par un manchon de jonction 36, ainsi qu'une deuxième extrémité 34.2 positionnée dans la deuxième zone 26.2, emmanchée dans le deuxième tronçon 24.2 et reliée par vissage à ce dernier. Les premier et deuxième tronçons 24.1, 24.2, le corps tubulaire 34 et le manchon de jonction 36 sont métalliques.

Pour empêcher la rotation du corps tubulaire 34, ce dernier présente une portion 34.3 avec une section polygonale positionnée au niveau de l'orifice 30 de la paroi pare-feu 28, en saillie dans la première zone 26.1. En complément, le dispositif de raccordement 32 comprend un système anti-rotation qui comporte une plaque anti-rotation 38, fixée contre la face de la paroi pare-feu 28 orientée vers la première zone 26.1, qui présente un orifice 38.1 ayant une section complémentaire à la section polygonale de la portion 34.3 du corps tubulaire 34. Cette plaque anti-rotation 38 est reliée à la paroi pare-feu 28 par une pluralité d'éléments de fixation 40 qui traversent la plaque anti-rotation 38 et la paroi pare-feu 28. Cette plaque anti-rotation 38, positionnée dans la première zone 26.1, et ses éléments de fixation 40 sont métalliques pour résister à la chaleur.

Selon cette configuration, un tronçon dégagé du corps tubulaire 34, situé entre le manchon de jonction 36 et la plaque anti-rotation 38, est directement soumis aux flammes en cas d'incendie dans la première zone 26.1.

Le dispositif de raccordement 32 comprend également un joint d'étanchéité 42 intercalé entre le corps tubulaire 34 et le deuxième tronçon 24.2. Ce joint d'étanchéité 42, positionné dans la deuxième zone 26.2, est en matériau polymère.

La présente invention vise à augmenter la protection de tout élément sensible à la chaleur positionnée dans la deuxième zone, comme le joint d'étanchéité 42, en cas d'incendie dans la première zone 26.1.

A cet effet, l'invention a pour objet une paroi pare-feu d'aéronef séparant une première zone correspondant à une zone feu et une deuxième zone, ladite paroi pare-feu comprenant un dispositif de raccordement d'une canalisation traversant ladite paroi pare-feu qui comporte un corps tubulaire, en un matériau conducteur thermiquement, à cheval de part et d'autre de la paroi pare-feu, présentant une première extrémité, se positionnant en fonctionnement dans la première zone et configurée pour être reliée à un premier tronçon de la canalisation, et une deuxième extrémité se positionnant en fonctionnement dans la deuxième zone et configurée pour être reliée à un deuxième tronçon de la canalisation.

Selon l'invention, la paroi pare-feu comprend au moins un bouclier thermique, se positionnant en fonctionnement dans la première zone, recouvrant au moins le corps tubulaire, tout en étant espacé dudit corps tubulaire de manière à créer une lame d'air entre le bouclier thermique et le corps tubulaire.

Le bouclier thermique et la lame d'air freinent la propagation de la chaleur en cas d'incendie, en direction d'éléments moins résistants à la chaleur présents dans la deuxième zone, comme le joint d'étanchéité.

Selon une configuration, le dispositif de raccordement comporte une plaque anti-rotation, se positionnant en fonctionnement dans la première zone, reliée à la paroi pare-feu par au moins un élément de fixation traversant la paroi pare-feu. Selon cette configuration, le bouclier thermique est configuré pour recouvrir au moins l'un des éléments de fixation, tout en étant espacé dudit élément de fixation de manière à créer une lame d'air entre le bouclier thermique et l'élément de fixation.

Selon une autre caractéristique, le dispositif de raccordement comprend un unique bouclier thermique qui recouvre le corps tubulaire et la plaque anti-rotation.

Selon une autre caractéristique, le bouclier thermique comprend une plaque de protection qui s'étend approximativement parallèlement à la paroi pare-feu et une paroi périphérique, qui s'étend sur toute la périphérie de la plaque de protection, faiblement espacée de la paroi pare-feu et de la plaque de protection.

Selon une autre caractéristique, le dispositif de raccordement comprenant un système de raccordement pour relier la première extrémité du corps tubulaire et le premier tronçon de la canalisation, le bouclier thermique comprend une plaque de protection qui comporte un orifice présentant une section légèrement supérieure à celle du premier tronçon de la canalisation ou du système de raccordement de sorte que la plaque de protection soit espacée du premier tronçon de la canalisation ou du système de raccordement sur tout leur pourtour.

Selon une autre caractéristique, la plaque de protection comprend un bord effilé délimitant l'orifice.

Selon une autre caractéristique, chaque bouclier thermique est métallique.

Selon une autre caractéristique, chaque bouclier thermique est relié à la paroi pare-feu par au moins un élément de liaison.

L'invention a également pour objet un aéronef comprenant au moins une paroi pare-feu selon l'une des caractéristiques précédentes.

D'autres caractéristiques et avantages ressortiront de la description de l'invention qui va suivre, description donnée à titre d'exemple uniquement, en regard des dessins annexés parmi lesquels :
[Figure 1] est une vue latérale d'un aéronef,
[Figure 2] est une représentation schématique d'une canalisation traversant une paroi pare-feu séparant le mât et l'ensemble propulsif,
[Figure 3] est une vue en perspective, depuis une première zone, d'un dispositif de raccordement d'une canalisation positionné au niveau d'une paroi pare-feu qui illustre un mode de réalisation de l'art antérieur,
[Figure 4] est une coupe longitudinale du dispositif de raccordement visible sur la figure 3 qui illustre un mode de réalisation de l'art antérieur,
[Figure 5] est une coupe schématique d'une partie d'un dispositif de raccordement équipé d'un bouclier thermique qui illustre un mode de réalisation de l'invention,
[Figure 6] est une coupe longitudinale d'un dispositif de raccordement équipé d'un bouclier thermique qui illustre un mode de réalisation de l'invention, et
[Figure 7] est une vue en perspective, depuis une première zone, du dispositif de raccordement visible sur la figure 6.

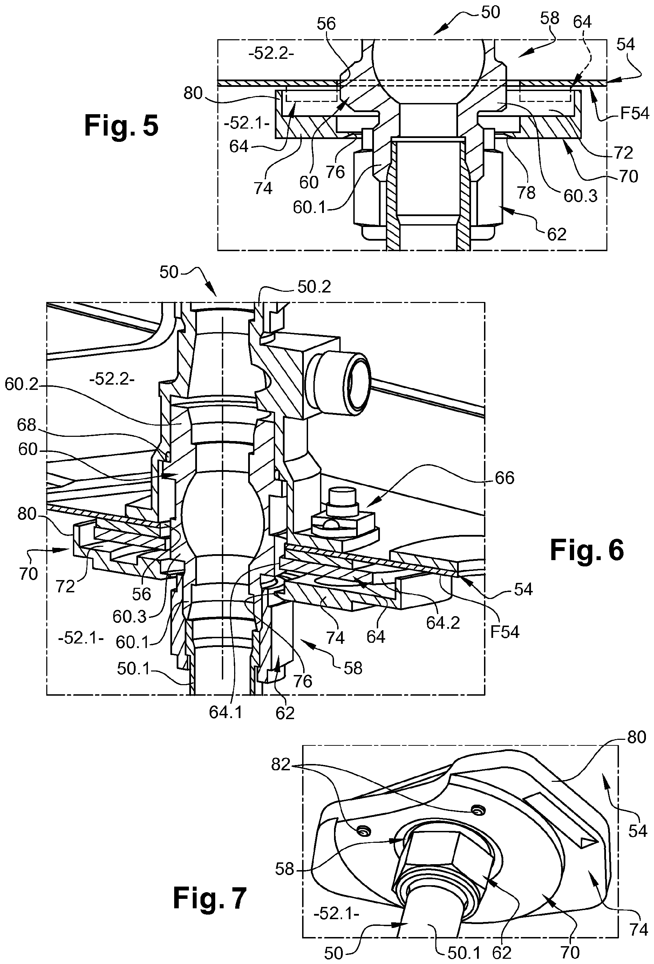

Sur les figures 5 à 7, on a représenté une canalisation 50 d'un fluide inflammable qui chemine dans une première zone 52.1 puis dans une deuxième zone 52.2 séparées par une paroi pare-feu 54 qui présente un orifice 56 pour permettre le passage de la canalisation 50 à travers la paroi pare-feu 54. Selon une configuration, la première zone 52.1 est une zone feu.

Selon une application, la première zone 52.1 est située dans un ensemble propulsif d'un aéronef et la deuxième zone 52.2 est située dans un mât d'aéronef. Bien entendu, l'invention n'est pas limitée à cette application et peut être appliquée à d'autres canalisations traversant une paroi pare-feu d'un aéronef.

La paroi pare-feu 54 est configurée pour limiter la propagation du feu et les transferts thermiques entre les première et deuxième zones 52.1, 52.2.

La canalisation 50 comprend un premier tronçon 50.1 disposé dans la première zone 52.1, un deuxième tronçon 50.2 disposé dans la deuxième zone 52.2 ainsi qu'un dispositif de raccordement 58, reliant les premier et deuxième tronçons 50.1, 50.2, positionné au niveau de l'orifice 56 de la paroi pare-feu 54.

Selon un mode de réalisation, le dispositif de raccordement 58 comprend un corps tubulaire 60 qui présente une première extrémité 60.1, positionnée dans la première zone 52.1 et configurée pour être reliée au premier tronçon 50.1, ainsi qu'une deuxième extrémité 60.2 positionnée dans la deuxième zone 52.2 et configurée pour être reliée au deuxième tronçon 50.2. Selon une configuration, le dispositif de raccordement 58 comprend un manchon de jonction 62, ou tout autre système de raccordement, pour relier la première extrémité 60.1 du corps tubulaire 60 et le premier tronçon 50.1. La deuxième extrémité 60.2 du corps tubulaire 60 est emmanchée et vissée dans le deuxième tronçon 50.2.

Les premier et deuxième tronçons 50.1, 50.2, le corps tubulaire 60 et le manchon de jonction 62 sont métalliques.

Pour empêcher la rotation du corps tubulaire 60, ce dernier présente une portion 60.3 avec une section polygonale positionnée au niveau de l'orifice 56 de la paroi pare-feu 54, en saillie dans la première zone 52.1. En complément, le dispositif de raccordement 58 comprend un système anti-rotation qui comporte une plaque anti-rotation 64, fixée contre une face F54 de la paroi pare-feu 54 orientée vers la première zone 52.1, qui présente un orifice 64.1 ayant une section complémentaire à la section polygonale de la portion 60.3 du corps tubulaire 60. La plaque anti-rotation 64 présente un chant périphérique 64.2 qui s'étend sur tout le pourtour de la plaque anti-rotation 64 et qui est approximativement perpendiculaire à la paroi pare-feu 54. Cette plaque anti-rotation 64 est reliée à la paroi pare-feu 54 par au moins un élément de fixation 66 qui traverse la plaque anti-rotation 64 et la paroi pare-feu 54. Cette plaque anti-rotation 64 (positionnée dans la première zone 52.1) et ses éléments de fixation 66 sont métalliques pour résister à la chaleur.

Le dispositif de raccordement 58 comprend également un joint d'étanchéité 68 intercalé entre le corps tubulaire 60 et le deuxième tronçon 50.2. Ce joint d'étanchéité 68, positionné dans la deuxième zone 52.2, est en matériau polymère.

Les premier et deuxième tronçons 50.1, 50.2, le corps tubulaire 60, le manchon de jonction 62, le système anti-rotation ainsi que le joint d'étanchéité 68 ne sont pas plus décrits car ils sont connus de l'homme du métier et peuvent être identiques à ceux de l'art antérieur.

Quel que soit le mode de réalisation, le dispositif de raccordement 58 comprend au moins un élément traversant en un matériau conducteur thermiquement, à cheval de part et d'autre de la paroi pare-feu 54, positionné partiellement dans la première zone 52.1, comme le corps tubulaire 60 qui présente un tronçon dégagé 60.3 situé entre le manchon de jonction 62 et la plaque anti-rotation 64 et/ou le (ou les) élément(s) de fixation 66 de la plaque anti-rotation 64.

Le dispositif de raccordement 58 comprend au moins un bouclier thermique 70 disposé dans la première zone 52.1 correspondant à la zone feu, recouvrant au moins le corps tubulaire 60, tout en étant espacé dudit corps tubulaire 60 de manière à créer une lame d'air 72 entre le bouclier thermique 70 et le corps tubulaire 60. Cette lame d'air 72 forme un isolant thermique qui limite les transferts thermiques entre le bouclier thermique 70 et le corps tubulaire 60.

Le dispositif de raccordement 58 comprend au moins un bouclier thermique 70 disposé dans la première zone 52.1 correspondant à la zone feu, recouvrant au moins l'un des éléments de fixation 66, tout en étant espacé dudit élément de fixation 66 de manière à créer une lame d'air 72 entre le bouclier thermique 70 et l'élément de fixation 66.

De manière générale, le dispositif de raccordement comprend au moins un bouclier thermique 70, positionné dans la première zone 52.1, recouvrant au moins l'un des éléments traversants 60, 66, tout en étant espacé dudit élément traversant 60, 66 de manière à créer une lame d'air 72 entre le bouclier thermique 70 et l'élément traversant 60, 66.

Pour assurer sa fonction d'isolant thermique, la lame d'air 72 doit avoir une épaisseur supérieure ou égale à 2 mm.

Chaque bouclier thermique 70 est métallique. Selon un mode de réalisation, le bouclier thermique 70 est réalisé en alliage de titane.

Selon un mode de réalisation visible sur les figures 5 à 7, le dispositif de raccordement 58 comprend un unique bouclier thermique 70 qui recouvre le tronçon dégagé 60.3 du corps tubulaire 60 et la plaque anti-rotation 64.

Ce bouclier thermique 70 comprend une plaque de protection 74, approximativement parallèle à la paroi pare-feu 54, comportant un orifice 76 qui présente une section légèrement supérieure à celle du premier tronçon 50.1 de la canalisation 50 ou du système de raccordement. Ainsi, la plaque de protection 74 est espacée du premier tronçon 50.1 de la canalisation 50 ou du système de raccordement sur tout leur pourtour. Cet espacement, inférieur à 5 mm, permet de limiter les risques d'exposition des éléments traversants 60, 66 aux flammes en cas d'incendie.

Selon une configuration visible notamment sur la figure 5, la plaque de protection 74 comprend un bord effilé 78 délimitant l'orifice 76, qui s'étend sur tout le pourtour de l'orifice 76. Ce bord effilé 78 permet de limiter les transferts thermiques entre le bouclier thermique 70 et le premier tronçon 50.1 de la canalisation ou le système de raccordement.

Le bouclier thermique 70 comprend, en plus de la plaque de protection 74, une paroi périphérique 80 qui s'étend sur toute la périphérie de la plaque de protection 74, approximativement parallèlement au chant périphérique 64.2 de la plaque anti-rotation 64. La paroi périphérique 80 est faiblement espacée de la paroi pare-feu 54 et de la plaque anti-rotation 64 sur toute sa périphérie. Ce faible espacement (inférieur à 5 mm) permet de limiter les risques d'exposition des éléments traversants 60, 66 aux flammes en cas d'incendie.

Le bouclier thermique 70 est relié directement ou indirectement à la paroi pare-feu 54 par au moins un élément de liaison 82 arrangé pour limiter les transferts thermiques en direction de la deuxième zone 52.2. Chaque élément de liaison 82 a ainsi une surface de contact réduite avec le bouclier thermique 70. De préférence, l'élément de liaison 82 est réalisé dans un matériau ayant une conductivité moindre que celle du matériau du deuxième tronçon 50.2. Le matériau de l'élément de liaison 82 est, par exemple, du titane ou un matériau composite quand le matériau du deuxième tronçon 50.2 est de l'acier.

En cas d'incendie dans la première zone 52.1 qui correspond à une zone feu, le bouclier thermique 70 empêche les flammes d'être directement en contact avec les éléments traversants, comme le corps tubulaire 60 et les éléments de fixation 66 de la plaque anti-rotation 64. La lame d'air 72 limite les transferts thermiques entre le bouclier thermique 70 et ces éléments.

Ainsi, le bouclier thermique 70 et la lame d'air 72 freinent la propagation de la chaleur en direction d'éléments moins résistants à la chaleur présents dans la deuxième zone 52.2, comme le joint d'étanchéité 68.

## Revendications

1. Paroi pare-feu d'aéronef séparant une première zone (52.1) correspondant à une zone feu et une deuxième zone (52.2), ladite paroi pare-feu (54) comprenant un dispositif de raccordement (58) d'une canalisation (50) traversant ladite paroi pare-feu (54) qui comporte un corps tubulaire (60) en un matériau conducteur thermiquement, à cheval de part et d'autre de la paroi pare-feu (54), présentant une première extrémité (60.1), se positionnant en fonctionnement dans la première zone (52.1) et configurée pour être reliée à un premier tronçon (50.1) de la canalisation (50), et une deuxième extrémité (60.2) se positionnant en fonctionnement dans la deuxième zone (52.2) et configurée pour être reliée à un deuxième tronçon (50.2) de la canalisation (50), **caractérisée en ce que** la paroi pare-feu (54) comprend au moins un bouclier thermique (70), se positionnant en fonctionnement dans la première zone (52.1), recouvrant au moins le corps tubulaire (60) tout en étant espacé dudit corps tubulaire (60) de manière à créer une lame d'air (72) entre le bouclier thermique (70) et le corps tubulaire (60).

2. Paroi pare-feu d'aéronef selon la revendication 1, le dispositif de raccordement (58) comportant une plaque anti-rotation (64), se positionnant en fonctionnement dans la première zone (52.1), reliée à la paroi pare-feu (54) par au moins un élément de fixation (66) traversant la paroi pare-feu (54), **caractérisée en ce que** le bouclier thermique (70) est configuré pour recouvrir au moins l'un des éléments de fixation (66) tout en étant espacé dudit élément de fixation (66) de manière à créer une lame d'air (72) entre le bouclier thermique (70) et l'élément de fixation (66).

3. Paroi pare-feu d'aéronef selon la revendication précédente, **caractérisée en ce que** le dispositif de raccordement (58) comprend un unique bouclier thermique (70) qui recouvre le corps tubulaire (60) et la plaque anti-rotation (64).

4. Paroi pare-feu d'aéronef selon la revendication précédente, **caractérisée en ce que** le bouclier thermique (70) comprend une plaque de protection (74) qui s'étend approximativement parallèlement à la paroi pare-feu (54) et une paroi périphérique (80), qui s'étend sur toute la périphérie de la plaque de protection (74), faiblement espacée de la paroi pare-feu (54) et de la plaque de protection (74).

5. Paroi pare-feu d'aéronef selon l'une des revendications 1 à 4, le dispositif de raccordement (58) comprenant un système de raccordement pour relier la première extrémité (60.2) du corps tubulaire (60) et le premier tronçon (50.1) de la canalisation (50), **caractérisée en ce que** le bouclier thermique (70) comprend une plaque de protection (74) qui comporte un orifice (76) présentant une section légèrement supérieure à celle du premier tronçon (50.1) de la canalisation (50) ou du système de raccordement de sorte que la plaque de protection (74) soit espacée du premier tronçon (50.1) de la canalisation (50) ou du système de raccordement sur tout leur pourtour.

6. Paroi pare-feu d'aéronef selon la revendication précédente, **caractérisée en ce que** la plaque de protection (74) comprend un bord effilé (78) délimitant l'orifice (76).

7. Paroi pare-feu d'aéronef selon l'une des revendications précédentes, **caractérisée en ce que** chaque bouclier thermique (70) est métallique.

8. Paroi pare-feu d'aéronef selon l'une des revendications précédentes, **caractérisée en ce que** chaque bouclier thermique (70) est relié à la paroi pare-feu (54) par au moins un élément de liaison (82).

9. Aéronef comprenant au moins une paroi pare-feu selon l'une des revendications précédentes.
